# EUROPÄISCHE PATENTANMELDUNG

(11) **EP 1 190 793 A1**
(43) Veröffentlichungstag der Anmeldung: **27.03.2002**
(21) Anmeldenummer: 00250314.2
(22) Anmeldetag: 22.09.2000
(51) Int. Cl.: B23B 3/26, B23B 5/16

(54) **Vorrichtung zur Bearbeitung des Endenbereichs von Werkstücken**

(71) Anmelder: Wallich, Erich, 09648 Mittweida (DE)
(72) Erfinder: Wallich, Erich, 09648 Mittweida (DE)
(74) Vertreter: Krause, Wolfgang, Dr.-Ing., Dipl.-Ing.

(57) **Zusammenfassung**

Die Erfindung betrifft Vorrichtungen zur Bearbeitung des Endenbereichs von Werkstücken mit mindestens einem umlaufenden Werkzeug und stehendem Werkstück, insbesondere von Groß- und/oder Langrohren.

Die Vorrichtungen zeichnen sich insbesondere dadurch aus, dass das Werkzeug bei drehendem Werkzeugträger jederzeit unabhängig bewegbar ist. Bei der Anordnung mehrerer Werkzeuge auf dem Werkzeugträger sind diese sowohl unabhängig voneinander als auch unabhängig gegenüber dem Werkstück verfahrbar. Gleichzeitig kann die Bewegung des Werkzeugs gegenüber dem Werkstück gestoppt werden. Die Werkzeuge sind dazu auf oder an Bauteilen befestigt. Die Bauteile sind z.B. als Schlitten ausgeführt.

Ein weiterer wesentlicher Vorteil besteht darin, dass mit dem Bauteil ein Antriebsmechanismus für ein Werkzeug einschließlich des Werkzeugs verbindbar ist. Damit wird das Werkzeug bewegt, so dass darauf basierende Fertigungsverfahren zum Einsatz kommen können.

## Beschreibung

Die Erfindung betrifft Vorrichtungen zur Bearbeitung des Endenbereichs von Werkstücken mit mindestens einem umlaufenden Werkzeug und stehendem Werkstück, insbesondere von Groß- und/oder Langrohren.

Ein Bearbeiten von radial feststehenden Werkstücken mit drehenden Werkzeugen ist aus mehreren Lösungen bekannt. Bearbeitungsköpfe sind unter anderem in der DE 29 52 752 (Drehkopf, insbesondere Plandrehkopf) und DE 34 40 398 (Umlaufender Bearbeitungskopf) aufgeführt. Eine Bewegung der Werkzeuge gegenüber dem Werkstück wird vorausgesetzt oder nicht näher beschrieben.
Die Bewegung der Werkzeuge erfolgt in der DE 32 37 587 (Vorrichtung zur Herstellung von Gewindeanschlüssen an Großrohren) über eine sich mitdrehende und verschiebbar angeordnete doppelseitig verzahnte Antriebsstange. Daran angekoppelte Stirnzahnräder, die gleichzeitig in an Werkzeugböcken angeordnete Zahnstangen eingreifen, dienen einer Bewegung der Werkzeugböcke. Damit sind die Werkzeugböcke nur gleichzeitig bewegbar und eine voneinander unabhängige Bewegung ist nicht möglich.
Eine Bewegung der Werkzeuge zum Werkstück erfolgt in der DE 33 41 479 (Vorrichtung zum Plandrehen), wobei eine Vorrichtung einen Drehkopf mit mehreren Werkzeugen aufweist und die gegenüber dem Werkstück verfahren werden können, über eine Schaltkupplung. Die Bewegungen sowohl der Arbeitswelle als auch der Werkzeugbauteile sind direkt miteinander verkoppelt, so dass eine unabhängige Bewegung der Werkzeugbauteile nicht möglich ist.

Der im Patentanspruch 1 angegebenen Erfindung liegt das Problem zugrunde, insbesondere die Endenbereiche von Werkstücken vorzugsweise Großrohren oder Langrohren so zu bearbeiten, dass plane Flächen, Phasen, kopierte Flächen und/ oder Gewinde entstehen.

Dieses Problem wird mit den im Patentanspruch 1 aufgeführten Merkmalen gelöst.

Die Vorrichtungen zur Bearbeitung des Endenbereichs von Werkstücken mit mindestens einem umlaufenden Werkzeug und stehendem Werkstück zeichnen sich insbesondere dadurch aus, dass das Werkzeug bei drehendem Werkzeugträger jederzeit unabhängig bewegbar ist. Bei der Anordnung mehrerer Werkzeuge auf dem Werkzeugträger sind diese sowohl unabhängig voneinander als auch unabhängig gegenüber dem Werkstück verfahrbar. Gleichzeitig kann die Bewegung des Werkzeugs gegenüber dem Werkstück gestoppt werden. Die Werkzeuge sind dazu auf oder an Bauteilen befestigt. Die Bauteile sind z.B. als Schlitten ausgeführt.
Ein weiterer wesentlicher Vorteil besteht darin, dass mit dem Bauteil ein Antriebsmechanismus für ein Werkzeug einschließlich des Werkzeugs verbindbar ist. Damit wird das Werkzeug bewegt, so dass darauf basierende Fertigungsverfahren zum Einsatz kommen können. Derartige Verfahren sind z.B. Fräs-, Schleif- und Sägeverfahren, die sich insbesondere durch die kleinen erzielbaren Spänegeometrien auszeichnen. Für ein Zerkleinern der Späne notwendige Konstruktionen in Form von z.B. Spanbrecher werden vermieden, so dass günstige ökonomische Aspekte gegeben sind.

Ein weiterer Vorteil besteht darin, dass die Bewegungen sowohl des Werkzeugträgers als auch des/r Werkzeugs/e unabhängig voneinander erfolgen. Ein Schaltvorgang oder eine Unterbrechung der Bearbeitung ist nicht notwendig, so dass eine kontinuierliche Bearbeitung des Werkstückes erfolgt. Die Bewegungen können synchronisiert werden. Die Einstellung und Steuerung und/oder Regelung der Bearbeitungstechnologie wird wesentlich vereinfacht. Weiterhin werden dadurch hervorgerufene Bearbeitungsfehler vermieden.
Die Vorrichtung zeichnet sich weiterhin durch ihren modularen Aufbau aus, der durch ein Gestell mit einem Antrieb für den Werkzeugträger und den Werkzeugträger mit einer unterschiedlichen Zahl z.B. von Geradführungen für mehrere Bauteile gegeben ist.
Durch einen kreisringförmigen Werkzeugträger, einen freien Raum im Gestell und einem dementsprechend ausgeführten Antrieb oder einem außerhalb des Werkzeugträgers angeordneten Antriebs kann das Werkstück vor, während oder nach einer Bearbeitung in die Vorrichtung eingeführt werden, so dass lange Bearbeitungsstrecken erzielbar sind, oder durch die Vorrichtung geführt werden. Damit sind die unterschiedlichsten Anwendungsfälle gegeben. Unter anderem ist nur eine Bewegungsrichtung für das Werkstück notwendig, so dass einfache Handhabungstechniken für den Transport des Werkstückes vor oder nach dessen Bearbeitung notwendig sind. Gleichzeitig ist eine kontinuierlich arbeitende Fertigungslinie realisierbar, ohne dass das Werkstück zur Bearbeitung der Enden gedreht werden muss. Der Platzbedarf reduziert sich auf ein Minimum. Dieser Sachverhalt ist besonders bei sehr langen Werkstücken von besonderer Bedeutung.
Mit dem Einsatz eines kreisförmig ausgebildeten Werkzeugträgers können die Werkzeuge bis zum Mittelpunkt verfahren werden. Damit können die Endenbereiche sowohl in ihrem Durchmesser kleine Werkstücke als auch der Innenbereich großer rohrförmiger Werkstücke bearbeitet werden.

Ein weiterer Vorteil besteht darin, dass anstelle eines Werkzeugs auch Sensoren mit dem Bauteil verkoppelt werden können. Ein Sensor ist dabei als ein Wandler zu verstehen, der ein Signal mit einem Signalträger aufnimmt und mit einem anderen Signalträger vorzugsweise einem elektrischen Signalträger abgibt. Dazu ist der Ausgang des Sensors mit einer programmierbaren Steuer- und/oder Regeleinrichtung verbunden. In der Regel sind das Messfühler, Detektoren oder Fühler. Fühler ändern ihre Eigenschaften z.B. den elektrischen Widerstand bei einer Beeinflussung z.B. durch das Einwirken mechanischer Kräfte.

Vorteilhafte Ausgestaltungen der Erfindung sind in den Patentansprüchen 2 bis 11 angegeben.

Die Ausgestaltung der Vorrichtung nach der Weiterbildung des Patentanspruchs 2 ermöglicht die Positionierung des Werkstücks in der Vorrichtung einschließlich des ringförmigen Elektromotors als Antrieb für den Werkzeugträger. Das Werkstück kann durch die Vorrichtung bewegt werden, so dass eine kontinuierliche Bearbeitung der Endenbereiche der Werkstücke gegeben ist. Ein Drehen des Werkstücks ist nicht notwendig. Dieser Sachverhalt ist besonders bei sehr langen Werkstücken von besonderer Bedeutung.
Weiterhin ist ein sehr einfacher und multifunktionaler Aufbau gegeben. Multifunktional bedeutet, dass weitere Antriebe für Werkzeuge oder Spannvorrichtungen für Werkstücke in diesem Hohlraum platziert werden können.

Ein erster Werkzeugträger mit einem mit einem Gestell verbundenen ringförmigen Elektromotor und ein zweiter mit einem Antrieb direkt oder über ein Getriebe verkoppelter und im Querschnitt kleiner als der Querschnitt des Hohlraums des ersten Werkzeugträgers, Gestells und/oder ringförmigen Elektromotors zweiter Werkzeugträger nach der Wieterbildung des Patentanspruchs 3 führt zu zwei unabhängig voneinander angetrieben Werkzeugträgern, wobei sich einer in dem Anderen befindet. Damit kann sowohl die Außenfläche als auch die Innenfläche des Endenbereiches des Werkstücks bearbeitet werden. Das kann sowohl nacheinander als auch gleichzeitig erfolgen. Der zweite Werkzeugträger ist dabei vorteilhafterweise so ausgeführt, dass dessen Werkzeuge im Endenbereich des Innenraumes des Werkstückes verfahren werden kann. Durch den ringförmigen Aufbau des ersten Werkzeugträgers, des Gestells und des Elektromotors als Antrieb für der ersten Werkzeugträger kann das Werkstück in diesen ausgebildeten Hohlraum eingefahren werden. Der zweite Werkzeugträger kann dabei auch aus der Vorrichtung heraus bewegt werden, so dass ein weiter Bereich der Innenfläche des Werkzeugs bearbeitet werden kann.

Eine Vorrichtung mit zwei parallel zueinander angeordneten und kreisringförmigen Werkzeugträgern, wobei sich ein ringförmiger Elektromotor dazwischen befindet und mit diesen Werkzeugträgern direkt oder über Getriebe verkoppelt ist, nach der Weiterbildung des Patentanspruchs 4 ist vorteilhafterweise zur Bearbeitung der beiden Enden von insbesondere kurzen Werkstücken geeignet. Das sind z.B. lösbare Rohrverbindungsstücke in Form von Gewindemuffen. Damit ist eine sehr ökonomische Fertigung derartiger Werkstücke vorhanden. Das Werkstück befindet sich dabei vorteilhafterweise mit einer Spannvorrichtung verfahrbar im Hohlraum, so dass beide Enden gleichzeitig oder nach einem kurzen Verfahrweg nacheinander, ohne das Werkstück zu drehen, bearbeitet werden können. Gleichzeitig ist der wesentliche Vorteil vorhanden, dass nur ein Antrieb für die Werkzeugträger notwendig ist. Damit ist eine sehr ökonomische Fertigung von insbesondere kurzen rohrförmigen Werkstücken mit Gewinden als Muffen gegeben.

Eine mit einem translatorischen Antrieb verkoppelte Spannvorrichtung für das Werkstück nach der Weiterbildung des Patentanspruchs 5 sichert zum Einen die Positionierung des Werkstücks in den Bearbeitungsbereich der Werkzeuge und führt zum Anderen dazu, dass eine Breite Innen- und/oder Außenfläche des Endenbereichs des Werkstücks bearbeitet werden kann. Gleichzeitig wird durch die Spannvorrichtung eine mittige Position des Werkstücks zum Werkzeugträger gewährleistet.

Eine Verbindung des mit dem zweiten Werkzeugträger verkoppelten Antriebes mit einem translatorischen Antrieb nach der Weiterbildung des Patentanspruchs 6 führt zu einer unabhängigen Bewegung des zweiten Werkzeugträgers gegenüber dem ersten Werkzeugträger und dem Werkstück. Eine breite Innenfläche des Werkstücks ist damit bearbeitbar.

Elektromotore für die Antriebsmechanismen der Werkzeuge nach der Weiterbildung des Patentanspruchs 7 wandeln eine leicht transportierbare Energie in eine mechanische Bewegung, wobei diese Bewegung über eine entsprechende Steuerung leicht beeinflussbar ist. Mit der Anordnung des Läufers des Elektromotors parallel oder rechtwinklig zur Symmetrieachse des Werkstücks wird der Einsatz von Werkzeugen ermöglicht, deren Bearbeitungsfläche eine Stirnfläche oder eine Umfangsfläche ist. Dadurch lassen sich eine Vielzahl von Werkzeugen einsetzen.

Günstige Werkzeuge für die Bearbeitung des Werkstückes sind in der Weiterbildung des Patentanspruchs 8 aufgeführt. Das sind unter anderem ein Drehmeißel für eine Flächenbearbeitung oder ein Flachgewindestrehler zum Einbringen eines Gewindes als nichtangetriebenes Werkzeug und ein Rund- Gewindestrehler, Wälzfräser, Werkzeug zum Gewindewirbeln jeweils zum Einbringen eines Gewindes, Sägeblatt jeweils zum Trennen, Drehfräser zur Flächenbearbeitung, eine Bürste zum Entgraten oder eine Schleifscheibe zum Trennen oder zur Flächenbearbeitung als angetriebenes Werkzeug.

Die Anordnung der Bauteile für die Werkzeuge auf oder in Geradführungen, die strahlenförmig vom Mittelpunkt des Werkzeugträgers weg weisen, nach der Weiterbildung des Patentanspruchs 9, sichert die Bewegung der Werkzeuge sowohl zum Mittelpunkt des Werkzeugträgers als auch von diesem weg. Gleichzeitig können je Geradführung auch vorteilhafterweise zwei Bauteile, in Form z.B. von Schlitten, angeordnet sein. Damit können sowohl eine Bearbeitung der Innenfläche und/oder der Querschnittsfläche des Werkstücks als auch eine Bearbeitung der Außenfläche und/oder der Querschnittsfläche des Werkstücks erfolgen.
Günstige Winkel zwischen den Geradführungen sind dabei ein Vielfaches von 15°.

Die Weiterbildung des Patentanspruchs 10 stellt eine Führung durch die Rolle für das Werkzeug dar. Die Rolle und das Werkzeug sind zusammen federnd gegenüber dem Werkzeugträger angeordnet, so dass kleine Unregelmäßigkeiten in der Geometrie der Wandung des Werkstücks ausgleichbar sind. Dabei wird ein gleichmäßiger bestimmter Abstand zwischen Rolle und Werkzeug gewährleistet.

Die programmierbare Steuer- und/oder Regeleinrichtung ist nach der Weiterbildung des Patentanspruchs 11 ein Mikrorechnersystem. Die Verbindung des Mikrorechnersystems mit den Antrieben, den Antriebsmechanismen und/oder der Sensoren ist auf dem Werkzeugträger über entsprechende Datenleitungen leicht möglich. Derartige Datenleitungen bestehen dabei vorteilhafterweise entweder aus einem elektrisch leitenden Werkstoff, z.B. Kupfer, oder optische Daten leitende Glasfasern.

Mit dem Mikrorechnersystem ergeben sich eine Vielzahl von Möglichkeiten für den Nutzer. Derartige Mikrorechnersysteme sind frei programmierbar, so dass für unterschiedliche Werkstücke speziell abgestimmte Programme für die darauf basierenden Verarbeitungstechnologien einsetzbar sind. Ein weiterer Vorteil besteht darin, dass derartige Mikrorechnersysteme eine lokale Intelligenz besitzen. Grundlage dafür bilden jeweils intelligente Sensoren und Aktuatoren. Intelligente Sensoren sind vorteilhafterweise auf den geführten Bauteilen angeordnet. Die intelligenten Sensoren können sich auch gleichzeitig oder in Kombination mit den Werkzeugen auf den geführten Bauteilen befinden. Die intelligenten Aktuatoren sind die Antriebe.
Als Mikrorechnersystem ist dabei ein
- zentrales System,
- Smart-System oder
- Multiprozessorsystem einsetzbar.
Damit wird das Mikrorechnersystem entweder entsprechend der Geometrie und der technologischen Bearbeitungsschritte programmiert oder ist eine sich entsprechend der Position der zu bearbeitenden Oberflächen des Werkstücks sich selbst programmierende. Im zweiten Fall wird die Position und die Oberflächengeometrie des Werkstücks über Sensoren vor oder während der Bearbeitung vermessen. Die daraus resultierenden Daten bilden die Grundlage für die Bearbeitung des Werkstücks.
Dazu wird vorteilhafterweise ein Speicher des Mikrorechnersystems von außen beschrieben und/oder diese mit einem externen Speicher kontaktiert.
Die letzte Variante ist besonders vorteilhaft, da die Bearbeitung in einem Computer simuliert durchgeführt werden kann. Ergebnis dieser Simulation ist die Datenfolge zur Bearbeitung, die auf dem externen Speicher abgelegt wird. Dieser externe Speicher ist mit dem Computer lösbar verbunden. Damit steht dem Nutzer ein ortsunabhängiges, transportables und in Form einer Bibliothek ablegbares Medium zur Verfügung.

Ausführungsbeispiele der Erfindung sind in den Zeichnungen dargestellt und werden im folgenden näher beschrieben.
Es zeigen:
- Fig. 1: eine Vorrichtung mit einem ringförmigen Elektromotor und einem kreisringförmigen Werkzeugträger in einer schematischen Schnittdarstellung,
- Fig. 2: eine prinzipielle Darstellung eines kreisringförmigen Werkzeugträgers in einer Draufsicht,
- Fig. 3: eine prinzipielle Darstellung eines kreisförmigen Werkzeugträgers in einer Draufsicht,
- Fig. 4: eine Vorrichtung mit zwei angetriebenen Werkzeugträgern in einer schematischen Schnittdarstellung,
- Fig. 5: eine prinzipielle Darstellung eines Bauteils auf einem Werkzeugträger mit einem Antriebsmechanismus und einem damit verkoppelten Werkzeug,
- Fig. 6: eine Vorrichtung mit einem ringförmigen Elektromotor mit zwei kreisringförmigen Werkzeugträgern in einer schematischen Schnittdarstellung,
- Fig. 7: zwei Vorrichtungen mit zueinander gerichteten Werkzeugträgern zur Bearbeitung von insbesondere kurzen Werkstücken in einer prinzipiellen Darstellung und
- Fig. 8: eine prinzipielle Darstellung einer Anordnung für eine Innenbearbeitung eines Werkstückes als Ausschnitt.

### 1. Ausführungsbeispiel

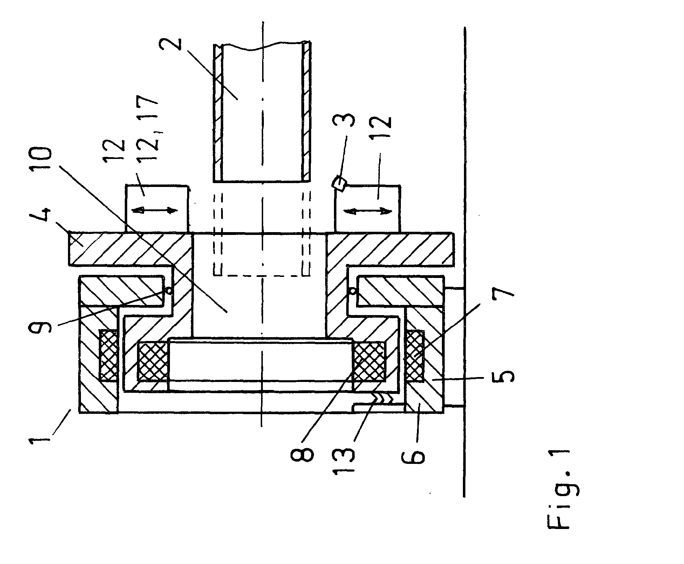

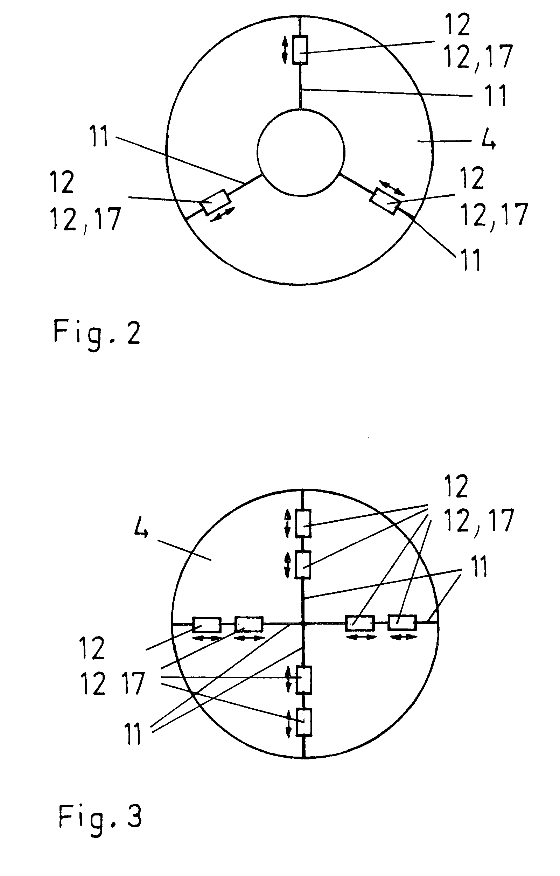

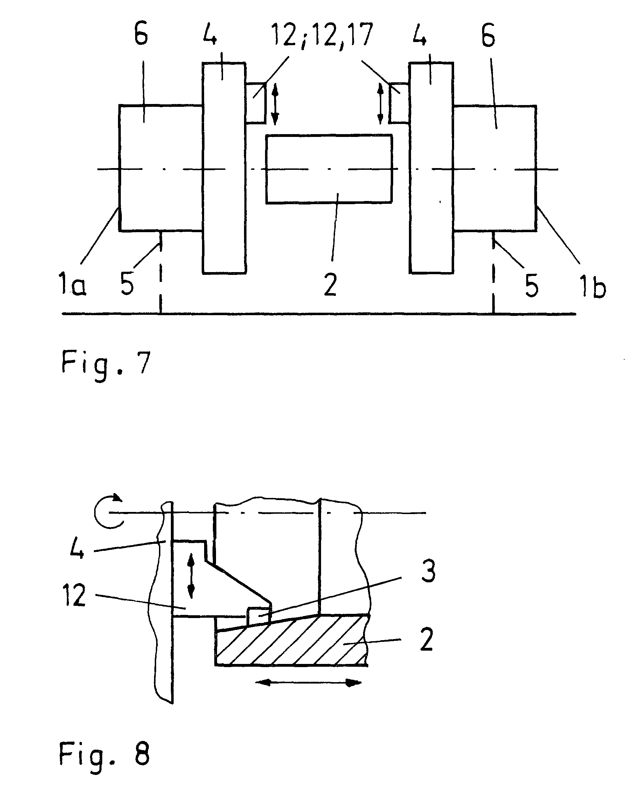

Eine Vorrichtung 1 zur Bearbeitung des Endenbereichs von Werkstücken 2 mit mindestens einem umlaufenden Werkzeug 3 und stehendem Werkstück 2 besteht in einem ersten Ausführungsbeispiel im Wesentlichen aus einem angetriebenen und kreisringförmig ausgebildeten Werkzeugträger 4, der zum Einen mit einem bewegten Teil eines Antriebs entweder direkt oder über ein Getriebe verbunden ist, wobei zum Anderen der Antrieb und/oder das Getriebe mit einem Gestell 5 verkoppelt ist.
Der Direktantrieb ist ein bürstenloser ringförmiger Elektromotor 6 dessen Läufer 8 mit dem kreisringförmigen Werkzeugträger 4 und dessen Stator 7 mit einem Gestell 5 fest verbunden ist. Zwischen dem Gestell 5 und dem kreiringförmigen Werkzeugträger 4 befindet sich ein Wälzlager 9 zum Stützen des kreisringförmigen Werkzeugträger 4. Der ringförmige Elektromotor 6 als Direktantrieb ist ein Synchronmotor, wobei am Läufer 8 Magnete angeordnet sind und sich im Stator 7 eine Drehstromwicklung befindet. In dieser wird ein magnetisches Drehfeld erzeugt. Als Ansteuerung des ringförmigen Elektromotors 6 kommt ein Frequenzumrichter zum Einsatz. Die Fig. 1 zeigt eine derartig ausgebildete Vorrichtung 1 mit dem ringförmigen Elektromotor 6 und dem kreisringförmigen Werkzeugträger 4 in einer schematischen Schnittdarstellung.
Durch den kreisringförmigen Werkzeugträger 4 und dem ringförmigen Elektromotor 6 ist ein Hohlraum 10 vorhanden, in dem das Werkstück 2 oder wenigstens der Endenbereich des Werkstücks 2 verfahren werden kann. Damit ist ein breiter Endenbereich des Werkstücks 2, das gegenüber der Vorrichtung 1 verfahrbar ist, bearbeitbar.
Der kreisringförmige Werkzeugträger 4 weist mehrere Geradführungen 11 in Form von
- Flachführungen mit Umgriffleisten gegen ein Abheben des Schlittens,
- Schwalbenschwanzführungen,
- Prismenführungen z.B. in Dach- und V- Form,
- Kombinationen, dass heißt unterschiedliche Führungen je Seite der Geradführung 11, daraus oder
- zylindrischen Führungen auf,
die strahlenförmig vom Mittelpunkt weg weisen. Die Winkel zwischen den Geradführungen 11 betragen 180° (2 Führungen), 120° (3 Führungen), 90° (4 Führungen) oder 60° (6 Führungen). In der Fig. 2 ist ein kreisringförmiger Werkzeugträger 4 mit drei Geradführungen 11 in einer Draufsicht prinzipiell dargestellt. Die Geradführungen 11 sind entweder als Gleitführungen mit einer hydrodynamischen, hydrostatischen oder aerostatischer Schmierung oder als Wälzführungen ausgebildet. Als Wälzkörper kommen Kugeln, Zylinderrollen oder Nadeln zum Einsatz. Eine besondere Variante sind dabei Umlaufelemente mit Rückführung der Wälzkörper, die ein-, zwei- oder vierreihig angeordnet sind. Eine weitere Möglichkeit sind Kugelführungen mit einer 2- oder 4- Punktberührung der kugelförmigen Wälzkörper zwischen einem Umlaufschuh und einer Führungsleiste. Jeweils wenigstens ein Bauteil 12 ist mit einer Geradführung 11 verkoppelt. Jedes Bauteil 12 ist mit einem Antrieb als Linearantrieb versehen. Das ist zum Einen ein Elektromotor, der eine tanslatorische Bewegung bewirkt, z.B. über ein Gewindespindel-/Gewindemutter- System oder Zahnstange-/Zahnrad- System, wobei die Rotationsbewegung des Elektromotors in eine translatorische Bewegung gewandelt wird. Eine weitere Variante sind Rollengewindetriebe. Diese zeichnen sich insbesondere durch ihre hohe Steifigkeit und hohen axialen Tragfähigkeit aus. Der Rollengewindetrieb besteht dabei prinzipiell aus einer Gewindespindel und einer Gewindemutter. In der Gewindemutter sind achsparallel Gewinderollen angeordnet. Rotiert die Gewindespindel, so drehen sich die Gewinderollen ohne axiale Verschiebung planetenartig um die Gewindespindel. Zahnkränze führen dabei die Gewinderollen radial. Der Elektromotor ist vorteilhafterweise mit einem Drehgeber verkoppelt, so dass die Position des Bauteils 12 erfassbar ist. Der Elektromotor kann auch ein elektrischer Schrittmotor sein, der aus mehreren Statoren besteht und bei entsprechender Ansteuerung der Felder Winkelschritte ausführt, so dass ein derartiger Antrieb zugleich Motor und Messmittel ist. Zum Anderen sind das kontinuierlich arbeitende Linearmotore (Gleichstromlinearmotore, elektrodynamische Linearmotore, Wanderfeldlinearmotore) oder Linearschrittmotore (elektromagnetische Linearschrittmotore, Piezomotore, magnetostriktive Linearschrittmotore). Weiterhin besitzt das Bauteil 12 eine Haltekonstruktion für ein Werkzeug 3. Die Haltekonstruktion ist dabei so ausgebildet, dass das Werkzeug 3 lösbar befestigt werden kann. Das Werkzeug 3 ist ein Meißel zum Erzeugen eines Kegels oder zum Abstechen der Querschnittsfläche des Werkstücks 2 oder ein Werkzeug 3 zum Einbringen eines Gewindes in Form eines Meißels oder Flachgewindestrehlers, so dass ein Endenbereich des Werkstückes 2 bearbeitet wird. In der Fig. 8 ist eine prinzipielle Darstellung einer Anordnung für eine Innenbearbeitung eines Werkstückes 2 als Ausschnitt gezeigt, wobei als Werkzeug 3 ein Flachgewindestrehler prinzipiell dargestellt ist.
Eine speicherprogrammierte oder numerische Steuerung mit einem Mikrorechnersystem, das sich auf dem kreisringförmigen Werkzeugträger 4 befindet, übernimmt die Steuerung der Bewegungen und das Positionieren der Bauteile 12. Das erfolgt über eine Software, die vor der Bearbeitung im Mikrorechnersystem implementiert wird. Ein Speicher wird dabei entweder vor der Bearbeitung beschrieben oder ein externer Speicher wird mit dem Mikrorechnersystem lösbar verkoppelt. Während der Bearbeitung verbleibt dieser Speicher beim Mikrorechnersystem. Der Speicher ist dabei vorteilhafterweise ein Datenspeicher in Kartenform, der über Kontakte mit dem Mikrorechnersystem verbindbar ist. In der Karte befindet sich z.B. ein EPROM, EEPROM, maskenprogrammierte ROM, NOVRAM oder eDRAM.
Das Mikrorechnersystem ist entweder ein zentrales System oder ein Multiprozessorsystem. Im ersten Fall sind die Elektromotore der Bauteile 12 und positionsbestimmende Einrichtungen in Form z.B. der mit den Elektromotoren verkoppelten Drehgebern mit dem zentralen System verbunden. Im zweiten Fall ist jeder Elektromotor der Bauteile 12 mit einem Mikrorechnersystem vorteilhafterweise mit einer positionsbestimmenden Einrichtung in Form z.B. des mit dem Elektromotor verkoppelten Drehgebers für jedes Bauteil versehen. Diese Mikrorechnersysteme sind entweder direkt oder über ein weiteres Mikrorechnersystem als Zentrale miteinander verbunden.
Zwischen dem bewegten kreisringförmigen Werkzeugträger 4 und einem feststehenden Bestandteil des Gestells 5 befindet sich ein Schleifkontaktsystem 13, das prinzipiell in der Fig. 1 gezeigt ist. Dieses dient der Übertragung elektrischer Energie von einer elektrischen Energiequelle zu dem bewegten kreisringförmigen Werkzeugträger 4. Grundlage ist wenigstens eine Feder, die auf einer kreisringförmigen Leiterbahn bewegt wird. Umgekehrt kann auch die Leiterbahn sich gegenüber der Feder bewegen. Sowohl die Feder als auch die Leiterbahn bestehen aus einem elektrisch leitenden Material mit einer hohen Verschleißfestigkeit. Die Anzahl der Federn richtet sich nach den elektrischen Bedingungen für die Stromversorgung.
In einer ersten Variante sind je Leiter des Energienetzes wenigstens eine Feder und eine Leiterbahn notwendig. Die Leiterbahnen sind parallel zueinander angeordnet. Als Energienetz kommt insbesondere das Ein- oder Dreiphasennetz mit einer Wechselspannung zur Anwendung. Dementsprechend werden je Phase und dem Nullleiter je mindestens eine Leiterbahn und wenigstens eine Feder eingesetzt. Damit ist eine elektrische Stromversorgung der Antriebe und des Mikrorechnersystems auf dem Werkzeugträger gegeben. Die Spannungen für die einzelnen Elektromotore und das Mikrorechnersystem werden aus der Wechselspannung des jeweiligen Netzes über Netzteile auf dem kreisringförmigen Wekzeugträger 4 erzeugt.
In einer zweiten Variante befinden sich die Netzteile außerhalb des kreisringförmigen Werkzeugträgers 4 und sind feststehend. Mittels des Schleifkontaktsystems 13 werden die einzelnen Spannungen für die Elektromotore und das Mikrorechnersystem zu dem kreisringförmigen Werkzeugträger 4 übertragen. Dadurch können die Netzteile leichter und kontrolliert gekühlt werden.
Das Starten der Vorrichtung erfolgt entweder optisch über Lichtstrahlen oder mittels elektromagnetischer Wellen jeweils zwischen einem Sender am Gestell 5 und einem Empfänger auf dem kreisringförmigen Werkzeugträger 4 berührungslos.
Das Werkstück 2 befindet sich auf einer Spannvorrichtung, die dieses in der Symmetrieachse des kreisringförmigen Werkzeugträgers 4 positioniert. Weiterhin ist die Spannvorrichtung gegenüber dem kreisringförmigen Werkzeugträger 4 über einen translatorisch wirkenden Antrieb verfahrbar. Die Spannvorrichtung ist bekannterweise realisiert und in der Fig. 1 nicht gezeigt.

In einer Ausführungsform des ersten Ausführungsbeispiels kann ein kreisförmiger Werkzeugträger 4 mit einem Antrieb versehen sein. In der Fig. 3 ist ein kreisförmiger Werkzeugträger 4 in einer Draufsicht prinzipiell gezeigt. Damit können pro Geradführung 11 zwei Bauteile 12 angeordnet werden, so dass die Außen- und die Innenfläche (Darstellung in der Fig. 8) eines rohrförmigen Werkstücks 2 bearbeitet werden kann.

### 2. Ausführungsbeispiel

Eine Vorrichtung 1 zur Bearbeitung des Endenbereichs von Werkstücken 2 mit umlaufenden Werkzeugen 3 und stehendem Werkstück 2 besteht in einem zweiten Ausführungsbeispiel aus einer Vorrichtung 1 entsprechend des ersten Ausführungsbeispiels.
Zusätzlich zum kreisringförmigen Werkzeugträger 4 des ersten Ausführungsbeispiels als einen ersten kreisringförmigen Werkzeugträger 4a, wird in diesem Ausführungsbeispiel ein zweiter Werkzeugträger 4b eingesetzt.
Der grundsätzliche Aufbau des zweiten Werkzeugträgers 4b entspricht dem des Ersten. Dabei ist der zweite Werkzeugträger 4b als kreisring- oder kreisförmiger Werkzeugträger 4b entsprechend des ersten Ausführungsbeispiel ausgeführt. Die Außenabmessungen des zweiten Werkzeugträgers 4b sind im Querschnitt kleiner als der Querschnitt des Hohlraumes 10 gebildet aus dem ersten kreisringförmigen Werkzeugträger 4a und dessen ringförmigen Elektromotors 6.
Der zweite Werkzeugträger 4b ist zum Einen mit dem Läufer 14 eines weiteren Elektromotors 15 direkt oder über ein Getriebe so verkoppelt, dass der zweite Werkzeugträger 4b Drehbewegungen vollführt. Der zweite Werkzeugträger 4b, dessen Bauteile 12 und die damit verkoppelten Werkzeuge 3 sind so ausgebildet, dass die Innenfläche (Darstellung in der Fig. 8) und/oder die Querschnittsfläche des Endenbereichs des Werkstücks 2 bearbeitbar ist. Dazu ist der zweite Werkzeugträger 4b über ein weiteres Wälzlager 9b gegenüber dem Gestell 5 abgestützt. Die Bearbeitung der Außenfläche des Endenbereichs des Werkstücks 2 erfolgt über die Werkzeuge 3 des ersten kreisringförmigen Werkzeugträgers 4a entsprechend des ersten Ausführungsbeispiels. Der Stator des weiteren Elektromotors 15 ist mit dem Gestell 5 verkoppelt.
In einer ersten Variante ist der weitere Elektromotor 15 für den zweiten Werkzeugträger 4b fest mit dem Gestell 5 verbunden. Die Positionen des zweiten Werkzeugträgers 4b gegenüber dem ersten kreisringförmigen Werkzeugträger 4a sind fest. Die Bearbeitung der Endenbereiche des Werkstücks 2 erfolgt über die translatorische Bewegung des Werkstücks 2 in seiner Symmetrieachse.
In einer zweiten Variante befindet sich zwischen dem zweiten Werkzeugträger 4b und dem weiteren Elektromotor 15 eine in ihrer Länge veränderbare Einrichtung mit einem translatorischen Antrieb für diese Längenänderung. Eine derartige Einrichtung sind wenigstens zwei teleskopartig, rohrförmig ausgebildete und ineinandergeführte Elemente. Der Längenänderung dient als translatorischer Antrieb ein Zahnrad-/ Zahnstangesystem, ein Gewindemutter-/ Gewindespindelsystem oder ein Zugmitteltrieb mit einer Kette, einem Seil oder einem Riemen (Keilriemen, Zahnriemen) als Zugmittel, das über wenigstens eine Antriebsrolle und eine Umlenkrolle geführt ist. Bei diesen linearen Antrieben wird das Zahnrad, die Gewindespindel oder die Antriebsrolle angetrieben. Jeweils eines der Bestandteile dieses translatorischen Antriebes ist fest mit einem der Elemente verkoppelt. Eine weitere Variante sind Rollengewindetriebe. Diese zeichnen sich insbesondere durch ihre hohe Steifigkeit und hohen axialen Tragfähigkeit aus. Der Rollengewindetrieb besteht dabei prinzipiell aus einer Gewindespindel und einer Gewindemutter. In der Gewindemutter sind achsparallel Gewinderollen angeordnet. Rotiert die Gewindespindel, so drehen sich die Gewinderollen ohne axiale Verschiebung planetenartig um die Gewindespindel. Zahnkränze führen dabei die Gewinderollen radial.
In einer dritten Variante besitzen der weitere Elektromotor 15 und der zweite Werkzeugträger 4b eine feste Position zueinander. Dabei ist der weitere Elektromotor 15 mit dem Gestell 5 über einen translatorischen Antrieb verkoppelt, so dass der weitere Elektromotor 15 und der zweite Werkzeugträger 4b zusammen gegenüber dem Gestell 5 und im Hohlraum 10 verfahrbar sind.
Der zweite Werkzeugträger 4b besitzt ein Mikrorechnersystem und zur Energieversorgung ein weiteres Schleifkontaktsystem 16 entsprechend des ersten Ausführungsbeispiels.

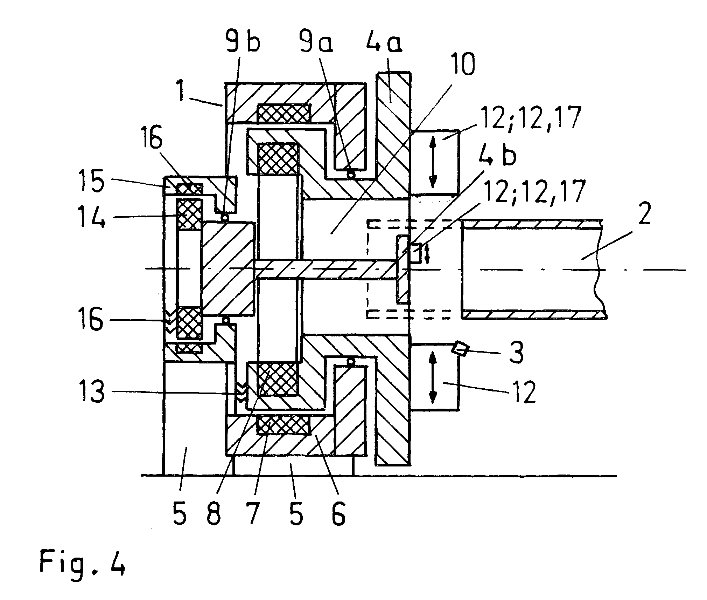

In der Fig. 4 ist eine Vorrichtung 1 mit zwei angetriebenen Werkzeugträgern 4a, 4b in einer schematischen Schnittdarstellung dargestellt.

### 3. Ausführungsbeispiel

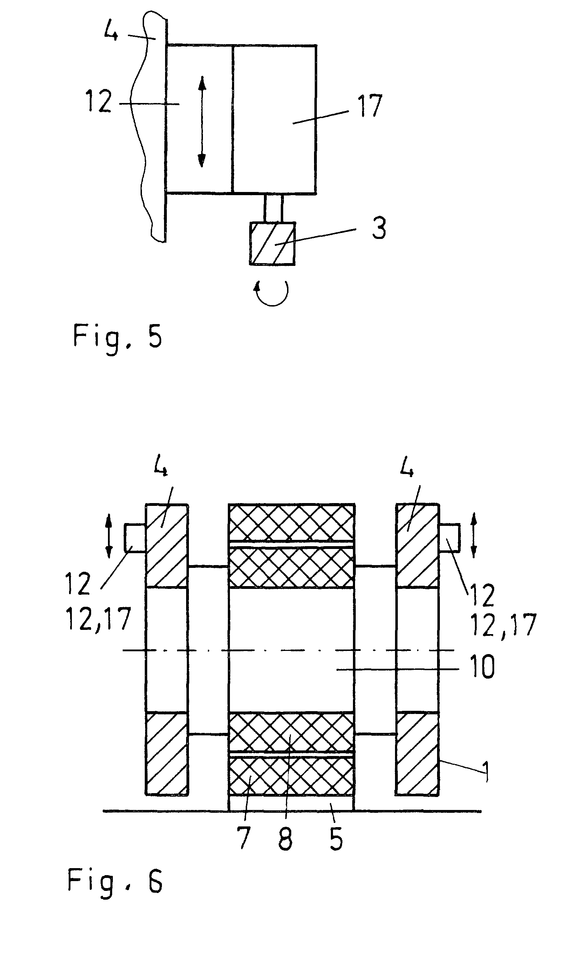

Grundlage eines dritten Ausführungsbeispiels sind Vorrichtungen 1 zur Bearbeitung des Endenbereiches von Werkstücken 2 des ersten oder zweiten Ausführungsbeispiels.
In Ergänzung des ersten oder zweiten Ausführungsbeispiels besitzt wenigstens ein Bauteil 12 des ersten und/oder zweiten Werkzeugträgers 4a, 4b einen Antriebsmechanismus 17 in Form eines Elektromotors einschließlich einer Haltekonstruktion für ein Werkzeug 3 (prinzipielle Darstellung der Fig. 5, wobei die Haltekonstruktion nicht dargestellt ist). Die Haltekonstruktion ist dabei so ausgebildet, dass das Werkzeug 3 lösbar befestigt werden kann. In einer Ausführungsform befindet sich zwischen dem Antriebsmechanismus 17 und der Haltekonstruktion eine Vorrichtung zur Aufnahme von mechanischen Kräften, die ansonsten den Antriebsmechanismus 17 zerstören könnten. Das sind insbesondere Getriebe mit integrierten flüssigen oder festen Dämpfungsmitteln oder Dämpfungseinrichtungen. Diese Vorrichtung dient in einer weiteren Ausführungsform weiterhin oder gleichzeitig der Änderung der Bewegungsrichtung entsprechend des verwendeten Werkzeugs 3. Diese Vorrichtungen sind dabei so ausgestaltbar, dass ein Winkel zwischen gleich/größer 0° und gleich/kleiner 180° realisierbar ist. Das basiert auf bekannten Getriebeanordnungen mit unter anderem verschieden gestalteten Zahnrädern, die als Stirn-, Kegel-, Schrauben- oder Schneckenzahnräder zum Einsatz kommen. Für eine Getriebestufe werden diese jeweils paarweise oder in einer Kombination eingesetzt. Damit ist es möglich, anzutreibende Werkzeuge 3 zur Bearbeitung des Endenbereichs von Werkstücken 2 mit einzubeziehen. Derartige Werkzeuge 3 sind unter anderem Rund- Gewindestrehler (zum Einbringen eines Gewindes), Wälzfräser (zum Einbringen eines Gewindes oder zur Oberflächenbearbeitung), Drehfräser (zur Oberflächenbearbeitung), Sägeblätter (zum Trennen), Werkzeuge zum Gewindewirbeln (zum Einbringen eines Gewindes), Schleifscheiben (zur Oberflächenbearbeitung, zum Trennen oder zum Einbringen eines Gewindes) oder Bürsten (zum Reinigen und Entzundern oder zur Oberflächenbearbeitung, z.B. Entgraten). Je nach Werkzeug 3 sind die Elektromotore für deren Antrieb so mit dem Bauteilen 12 verbunden, dass der Läufer des Elektromotors und die Symmetrieachse des Werkstücks 2 parallel oder rechtwinklig zueinander angeordnet sind.
Die Elektromotore als Antriebsmechanismen 17 für die Werkzeuge 3 sind mit dem Mikrorechnersystem des jeweiligen Werkzeugträgers 4a, 4b entsprechend des ersten oder zweiten Ausführungsbeispiels verkoppelt, so dass diese darüber steuerbar sind.

In einer Ausführungsform des ersten, zweiten oder dritten Ausführungsbeispiels befinden sich drei Bauteile 12 am Werkzeugträger 4a, 4b. Zwei Bauteile 12 sind z.B. mit einem angetriebenen Drehfräser und einem angetriebenen Rund- Gewindestrehler oder einem angetriebenen Wälzfräser entsprechend des dritten Ausführungsbeispiels ausgerüstet. Das dritte Bauteil ist mit einer Haltevorrichtung zur lösbaren Befestigung eines Werkzeugs 3 in Form eines Drehmeißels entsprechend des ersten Ausführungsbeispiels versehen. Dieser dient der Bearbeitung der Querschnittsfläche des Werkstücks 2. Damit ist ein Endenbereich mit einem Innen- oder Außengewinde und einem Dichtesitz für eine Dichteverschraubung herstellbar. In weiteren Ausführungsformen sind auch andere Kombinationen von Bauteilen 12 und Werkzeugen 3 entsprechend des ersten, zweiten und dritten Ausführungsbeispiels realisierbar.

### 4. Ausführungsbeispiel

Eine Vorrichtung 1 zur Bearbeitung des Endenbereichs von Werkstücken mit umlaufenden Werkzeugen und stehendem Werkstück besteht in einem vierten Ausführungsbeispiel im Wesentlichen aus zwei angetriebenen, parallel zueinander angeordneten und kreisringförmig ausgebildeten Werkzeugträgern 4 entsprechend des ersten und/oder dritten Ausführungsbeispiels, die mit dem Läufer 8 eines ringförmigen Elektromotors 6 so verbunden sind, dass sich dieser zwischen den kreisringförmigen Werkzeugträgern 4 befindet. Damit ist ein durchgehender Hohlraum 10 vorhanden, in dem das Werkstück entweder platziert oder platziert und verfahren werden kann. Der Stator 7 des ringförmigen Elektromotors 6 ist mit einem Gestell 5 verbunden.
Die kreisringförmigen Werkzeugträger 4 einschließlich der Mikrorechnersysteme für die Bauteile 12 sind entsprechend denen des ersten oder dritten Ausführungsbeispiels ausgebildet. Mit einer derartigen Vorrichtung 1 können die Endenbereiche eines kurzen Werkstückes, z.B. als Muffe, nacheinander oder gleichzeitig bearbeitet werden (Darstellung in der Fig. 6 und 8).
Das Werkstück befindet sich auf einer Spannvorrichtung, die dieses in der Symmetrieachse der Vorrichtung 1 positioniert. Weiterhin ist die Spannvorrichtung gegenüber den kreisringförmigen Werkzeugträgern 4 über einen Antrieb verfahrbar.

In einer Ausführungsform dieses Ausführungsbeispiels können zwei Vorrichtungen 1a, 1b (Darstellung in der Fig. 7) entsprechend des ersten und dritten Ausführungsbeispiels mit den Werkzeugträgern 4 zueinander gerichtet zur Bearbeitung der Endenbereiche insbesondere von kurzen Werkstücken 2 verwendet werden. Die Werkzeugträger 4 können kreisförmig und/oder kreisringförmig ausgebildet sein. Die kurzen Werkstücke 2 sind z.B. Muffen für Rohrverbindungen. Die Zuführung der Werkstücke 2 erfolgt dabei in den Raum zwischen den beiden Vorrichtungen 1a, 1b. Zur Bearbeitung können sowohl wenigstens eine der Vorrichtungen 1a, 1b gegenüber der anderen Vorrichtung 1a, 1b als auch das Werkstück 2 einschließlich einer Spanneinrichtung für das Werkstück 2 gegenüber den Vorrichtungen 1a, 1b bewegt werden. Mit einer derartigen Anordnung der Vorrichtungen 1a, 1b können Werkstücke 2 sowohl außen (Darstellung in der Fig. 7) als auch innen (Darstellung in der Fig. 8) bearbeitet werden.

## Patentansprüche

1. Vorrichtung zur Bearbeitung des Endenbereichs von Werkstücken mit mindestens einem umlaufenden Werkzeug und stehendem Werkstück, insbesondere von Groß- und/oder Langrohren, **dadurch gekennzeichnet, dass** mindestens ein angetriebener und kreis- oder kreisringförmiger Werkzeugträger (4) gegenüber einem Gestell (5) drehbar angeordnet ist, dass der Werkzeugträger (4) quer zu seiner Drehachse verfahrbare und der lösbaren Befestigung eines Werkzeuges (3), eines Sensors oder eines Antriebsmechanismusses (17) für ein Werkzeug (3) dienende Bauteile (12) aufweist, dass die Bauteile (12) mit wenigstens einem Antrieb auf dem Werkzeugträger (4) direkt oder mittels Übertragungsmechanismen so verkoppelt sind, dass die Bauteile (12) in Richtung sowohl zur Außenkante als auch zum Mittelpunkt des Werkzeugträgers (4) bewegbar sind, dass der Antrieb, der Sensor und/oder der Antriebsmechanismus (17) mit mindestens einer programmierbaren Steuer- und/oder Regeleinrichtung auf dem Werkzeugträger (4) verkoppelt sind und dass sich zwischen dem Gestell (5) und dem Werkzeugträger (4) ein der Übertragung elektrischer Energie von einer elektrischen Energiequelle für den wenigstens einen Antrieb, den mindestens einen Antriebsmechanismus (17) und der wenigstens einen programmierbaren Steuer- und/oder Regeleinrichtung dienendes Schleifkontaktsystem (13, 16) befindet.

2. Vorrichtung nach Patentanspruch 1, **dadurch gekennzeichnet, dass** ein erster kreisringförmiger Werkzeugträger (4a) mit einem ringförmigen Elektromotor (6) insbesondere einem bürstenlosen Ringmotor direkt oder über ein Getriebe verkoppelt ist.

3. Vorrichtung nach den Patentansprüchen 1 und 2, **dadurch gekennzeichnet, dass** der erste Werkzeugträger (4a) mit einem mit einem Gestell (5) verbundenen ringförmigen Elektromotor (6) verkoppelt ist und dass sich ein zweiter mit einem Antrieb direkt oder über ein Getriebe verkoppelter und im Querschnitt kleiner als der Querschnitt des Hohlraums (10) des ersten Werkzeugträgers (4a), Gestells (5) und/oder ringförmigen Elektromotors (6) ausgeführter Werkzeugträger (4b) so befindet, dass der zweite Werkzeugträger (4b) im oder außerhalb des Hohlraums (10) angeordnet ist.

4. Vorrichtung nach den Patentansprüchen 1 und 2, **dadurch gekennzeichnet, dass** sich zwischen zwei parallel zueinander angeordneten und kreisringförmigen Werkzeugträgern (4) ein ringförmiger Elektromotor (6) befindet, dass die kreisringförmigen Werkzeugträger (4) direkt oder Getriebe mit dem ringförmigen Elektromotor (6) verkoppelt sind und dass die kreisringförmigen Werkzeugträger (4) so angeordnet sind, dass die Bauteile (12) zueinander, voneinander weg oder in eine Richtung weisen.

5. Vorrichtung nach den Patentansprüchen 1 bis 4, **dadurch gekennzeichnet, dass** eine Spannvorrichtung für das Werkstück (2) gegenüber dem mindestens einem Werkzeugträger (4) über einen translatorischen Antrieb so angeordnet ist, dass wenigstens die Symmetrieachse des Endenbereichs des Werkstücks (2) und die des Werkzeugträgers (4) in ihrer Lage übereinstimmen.

6. Vorrichtung nach Patentanspruch 3, **dadurch gekennzeichnet, dass** der zweite Werkzeugträger (4b) und/oder der mit dem zweiten Werkzeugträger (4b) direkt oder über ein Getriebe verkoppelte Antrieb mit einem Linearantrieb verbunden ist.

7. Vorrichtung nach Patentanspruch 1, **dadurch gekennzeichnet, dass** dass der Antriebsmechanismus (17) ein Elektromotor ist und dass der Läufer des Elektromotors und die Symmetrieachse des Werkstücks (2) parallel oder rechtwinklig zueinander angeordnet sind.

8. Vorrichtung nach Patentanspruch 1, **dadurch gekennzeichnet, dass** das Werkzeug (3) ein mit dem Bauteil (12) lösbar verbundener Drehmeißel oder Flachgewindestrehler ist oder dass das Werkzeug (3) ein mit dem Antriebsmechanismus (17) lösbar verbundener Rund-Gewindestrehler, Wälzfräser oder Drehfräser, lösbar verbundenes kreisförmiges Sägeblatt oder Werkzeug zum Gewindewirbeln oder lösbar verbundene Schleifscheibe oder Bürste ist.

9. Vorrichtung nach Patentanspruch 1, **dadurch gekennzeichnet, dass** sich die Bauteile (12) auf oder in Geradführungen (11) befinden, dass die Geradführungen (11) strahlenförmig vom Mittelpunkt des Werkzeugträgers (4) weg weisen und dass die Geradführungen (11) einen Winkel mit einem Vielfachen von 15° einschließen.

10. Vorrichtung nach Patentanspruch 1, **dadurch gekennzeichnet, dass** sich die Wandung des Werkstücks (2) zwischen dem gegenüber einer Oberfläche des Werkstücks (2) verfahrbaren Werkzeug (3) und einer in ihrem Abstand gegenüber dem Werkzeug (3) einstellbaren Rolle befindet und dass wenigstens entweder das Werkzeug (3) oder der Antriebsmechanismus (17) und die Rolle gemeinsam gegenüber dem Werkzeugträger (4) in Richtung der Geradführung (11) federnd angeordnet sind.

11. Vorrichtung nach Patentanspruch 1, **dadurch gekennzeichnet, dass** das eine entsprechend der Geometrie und der technologischen Schritte mit den Werkzeugen (3) zur Bearbeitung mindestens eines Werkstücks (2) programmierbare Steuer- und/oder Regeleinrichtung insbesondere eine speicherprogrammierte oder eine numerische Steuerung mit einem zentralen oder einem verteilten Mikrorechnersystem ist oder dass das zum Einen eine die Antriebe der Bauteile (12) entsprechend der Position der zu bearbeitenden Oberflächen des Werkstücks (2) sich selbst programmierende Steuer- und/oder Regeleinrichtung und zum Anderen entsprechend der Technologie zur Herstellung eines Werkstücks (2) programmierbare Steuer- und/oder Regeleinrichtung insbesondere eine speicherprogrammierte oder eine numerische Steuerung jeweils mit einem zentralen oder einem verteilten Mikrorechnersystem ist und dass das Mikrorechnersystem wenigstens einen von außen beschreibbaren und der Aufnahme mindestens eines Bearbeitungsprogramms dienenden Speicher aufweist und/oder dass das Mikrorechnersystem mit mindestens einer lösbaren und externen Speichereinrichtung verkoppelt ist.
